Europäisches Patentamt

European Patent Office

Office européen des brevets

(11) Publication number: **0 200 643**
A2

# EUROPEAN PATENT APPLICATION

(21) Application number: 86400892.5

(22) Date of filing: 23.04.86

(51) Int. Cl.⁴: **G 01 S 13/90**
G 01 S 13/52

(30) Priority: 02.05.85 US 729789

(43) Date of publication of application:
05.11.86 Bulletin 86/45

(84) Designated Contracting States:
BE DE FR GB IT NL SE

(71) Applicant: **GRUMMAN AEROSPACE CORPORATION**
**South Oyster Bay Road**
**Bethpage, NY 11714(US)**

(72) Inventor: **Cataldo, Thomas J.**
**19 Ramita Lane**
**Commach New York 11725(US)**

(74) Representative: **Lerner, François**
**5, rue Jules Lefebvre**
**F-75009 Paris(FR)**

(54) Two-port synthetic aperture radar system.

(57) A two-port (port 1, 2) radar system measures the amplitude and phase clutter of target returns at both ports during staggered time intervals when sliding window processing occurs. Clutter returns remain constant but target returns from a moving target, between successive intervals, generate a phase difference indicative of relative radial target velocity.

PRIOR ART
FIG. 6

EP 0 200 643 A2

Title of the Invention:  TWO-PORT SYNTHETIC APERTURE
RADAR SYSTEM

Inventor:  Thomas J. Cataldo

### FIELD OF THE INVENTION

The present invention relates to a radar system and more particularly to a two-antenna (port) synthetic aperture system that attains detection of a target and determines its relative radial velocity and angular position from digital signal processing of the radar returns.

### BACKGROUND OF THE INVENTION

Three radar antennas or ports, employing three simultaneously synthetic aperture arrays, have been used for clutter suppression interferometry.  Each port is motion compensated for each radar transmitted pulse.  The motion of the radar platform is matched to the antenna spacings in a manner such that, at the occurrence of each radar-transmitted pulse, the antenna moves exactly one antenna spacing.  Therefore, in a three-port system, the last two antenna ports receive radar return data at the previous antenna position for three successive transmitted pulses. Phase compensation may be employed if positions are not exactly equal to the antenna spacing.  Assuming exact spacing for three successively transmitted pulses, each antenna port occupies the same position in space; and three radar clutter returns from the ground will have the same amplitude and phase, but objects moving on the ground (movers) will have different positions and consequently will customarily have a different amplitude and phase.

In a prior art three-port system, data from each antenna port is spectrally processed utilizing a well-known Fast Fourier Transform (FFT).  During a particular time interval there are "N" transmitted pulses and "M" range bins. In each range bin the "N" returns are spectrally processed in each antenna port. In each range bin of each port there are "N" doppler bin outputs. The doppler bin outputs correspond to the doppler signals detected at each antenna port. The outputs from antenna ports 1 and 2 are subtracted so that in a particular range bin the corresponding doppler bin output of port 2 is subtracted from that of port 1. If there are no movers, but just clutter, the subtraction will theoretically equal zero signifying no mover present. By subtracting the output signal vectors from the three ports, a phase angle is obtained which is proportional to the relative radial velocity of a target (mover) and is determinative of target true azimuth position.

In a simplified system of the prior art, three ports (antennas) may be considered as being spaced along a platform on a moving vehicle, such as an aircraft. Each of the ports radiates electromagnetic energy and, as the three ports move relative to a target, such as a ground based target, the second and third ports will see identical ground clutter. However, if there is a moving target on the ground (mover), there will be a displacement of the target when the second port arrives at the physical position that the first port occupied an instant before. This displacement also occurs for the detected signal by the third port when it moves to the position occupied by the second port an instant before. The displacement of such a mover results in phase shift of processed signals at the individual ports, which corresponds to relative radial velocity and the true target azimuth position, as will be now discussed in connection with the figures.

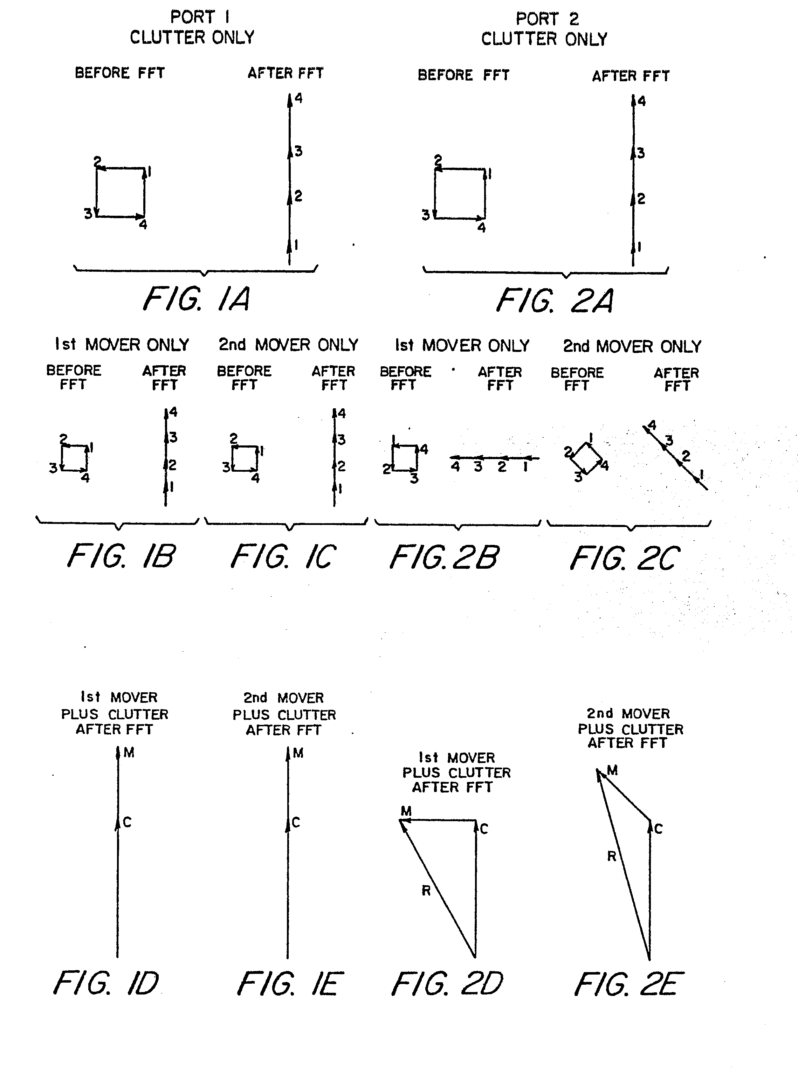

FIG. 1A-FIG. 5 indicate the three-port vector diagram technique for determining relative radial velocity of a mover. These diagrams, for purposes of illustration, have been simplified in a number of aspects to show the theory of operation.

What is shown is only four transmitted pulses per antenna port, instead of the hundreds that would actually be processed in a practical system. The spectrally processed signals from the four returns are vectorally added in a filter that is matched to an equivalent frequency. Because the antenna motion is compensated for in each port, the clutter in a particular doppler bin is the same in all ports. Thus, by way of example, if the signal at the second port were subtracted from that at the first port, or if the signal at the third port were subtracted from the second port, with only clutter present, the subtraction process would yield a null. Therefore, as indicated in FIG. 1A-FIG. 3A, the clutter ground returns for the illustrated four transmitted pulses per antenna, in all three ports, look exactly alike in all corresponding range doppler bins.

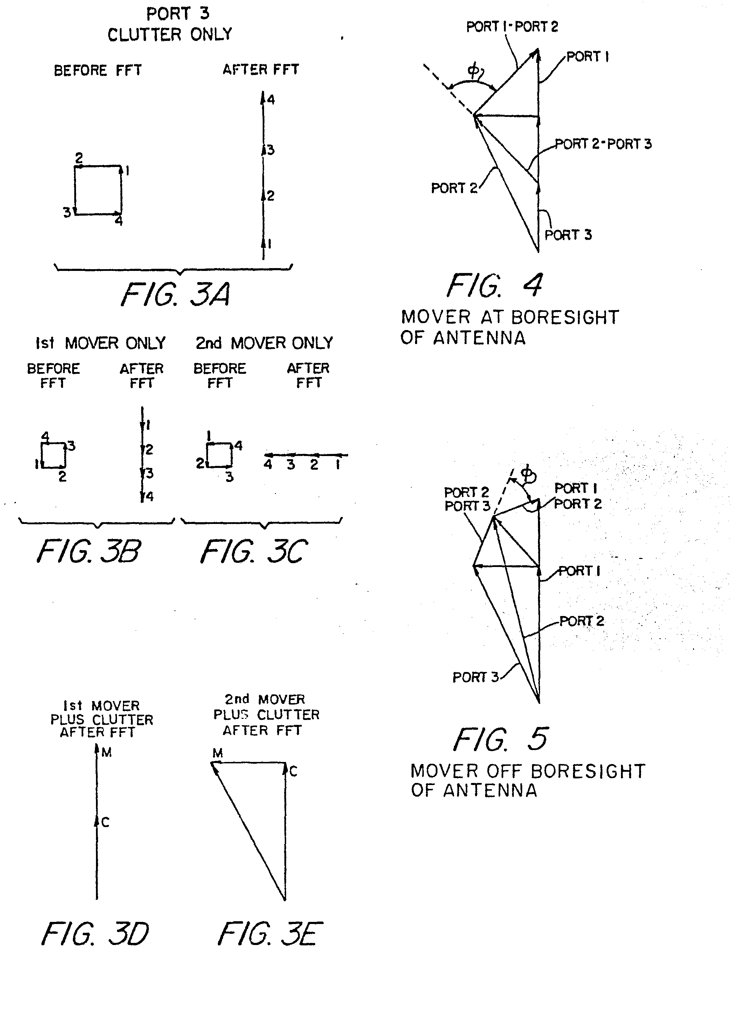

Referring to FIG. 1B, the return signals are vectorally represented for the case of a first mover in the absence of clutter, before and after spectral processing (FFT). As indicated, the signals from the first mover at the first port have the same spectral lines as clutter at that port. To view this another way, since the first mover occupies the same range doppler bin as the clutter in port 1, the ground returns appear identical. Considering FIGS. 2A and 2B, return signals from the first mover at the second port are phase shifted by $90^{\circ}$ per pulse when compared with the return signals of clutter at port 2. The first mover in port 2 is phase shifted with respect to the first mover in port 1 as is apparent from the returns of FIGS. 1B and 2B. It is this phase difference as detected by adjacent ports of an antenna, in response to a moving target, which is employed to determine relative radial velocity of the first mover. Inasmuch as the clutter is considered, it has no phase shift between ports. Similarly, in port 3 the first mover has a phase shift relative to the first mover in port 2, in the same doppler bin, as is apparent from the vector diagrams of FIGS. 2B and 3B. FIGS. 1C, 2C and 3C illustrate

orresponding vector diagrams for a second mover which has a ifferent radial velocity.

In FIGS. lD, 2D and 3D the resultant of the first mover round return plus the clutter return is vectorally epresented by respective vectors M and C. Similarly, the umulative vector effect of the second mover and clutter is ndicated in FIGS. lE, 2E and 3E. As will be observed in IGS. 2D, 2E, 3D and 3E, phase shift in the second and third ort signals occurs for the first and second mover vectors elative to the clutter vector due to the motion of the over. In other words, as an antenna platform moves elative to a target, the second port will see a displaced arget when that port occupies the position in space that he first port occupied an instant previously. Similarly, hen the third port occupies the position in space which the second port occupied an instant previously, it will see the arget displaced from the position it previously had, all of vhich results in the phase shift of the mover vector relative to the clutter vector.

In FIG. 4 the vector diagram is illustrated for the determination of relative radial velocity of a first mover. The vector diagram in FIG. 4 indicates each of the resultant vectors from ports 1-3 previously explained in connection with FIGS. lD, 2D and 3D. These are respectively indicated in FIG. 4 as the vectors for ports 1, 2 and 3. Each of these vectors is not drawn to the same scale as FIGS. lD, 2D and 3D but rather are drawn to exaggerate the differences of the resultant vectors at the ports so that phase determination can be more clearly indicated. Of crucial significance in the three-port system is the determination of the angle $\phi$ which is the phase difference between the vectors (port 1-port 2) and (port 2-port 3). The indicated phase difference of $90^{\circ}$ is proportional to the relative radial velocity of the first mover target which generated the returns at the three ports.

The true azimuth position of the target also depends upon this phase angle. In the event that the boresight of the antenna is coincident with the true azimuth position, the phase angle will be $90^{\circ}$ as indicated in FIG. 4. Accordingly, the first mover target discussed herein lies along the boresight of the antenna which generated the first mover returns at ports 1, 2 and 3.

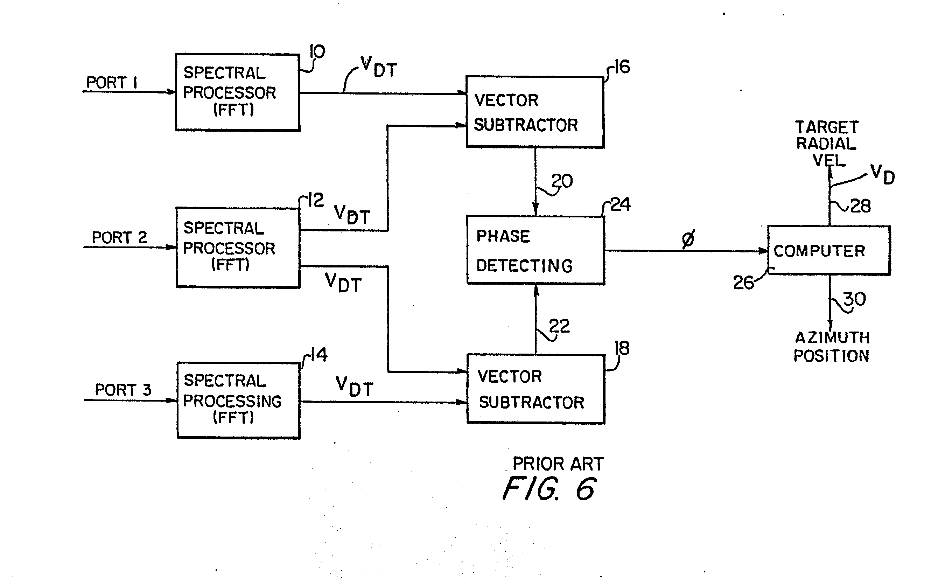

In an implementation of the three-port system as shown in FIG. 6, the signals at ports 1, 2, and 3 undergo separate spectral processing employing the mentioned Fast Fourier Transform (FFT) at blocks 10, 12 and 14. Vector subtraction of port 1-port 2 occurs in vector subtractor 16 while the vector subtraction for port 2-port 3 occurs in vector subtractor 18. A phase processor 24 determines the phase angle from the subtracted vector inputs at 20, 22. The output from phase processor 24 undergoes computing at 26 to determine the relative radial velocity and azimuth position by computations well known in the art.

In order to better illustrate the technique of the three-port system, a second mover or target will now be discussed, this mover not being at the boresight of the antenna as was the case with the first mover. FIGS. 1C, 2C and 3C illustrate the four-pulse-return vector diagram of the second mover only, in the absence of clutter, before and after spectral processing by means of Fast Fourier Transforms. The resultant vector diagrams of the second mover plus clutter, after processing, is respectively indicated for each port in FIGS. 1E, 2E and 3E. These latter-mentioned resultant vectors are employed in the vector diagram of FIG. 5 where the vectors from ports 1, 2 and 3, for the second mover, are illustrated with the second mover resultant vectors for (port 1-port 2) and (port 2-port 3). As in the case of the first mover, FIG. 6 accomplishes the latter-mentioned vector subtractions; and phase detector 24 determines the phase angle illustrated in FIG. 5 which again is determinative of target relative radial velocity and true azimuth position. In the situation shown in FIG. 5, the angle is no longer 90° which would be in line with boresight, as was the case of the first mover as shown in FIG. 4. For the second mover shown in FIG. 5, the phase angle indicates a true azimuth position which is off boresight and represents a relative radial target velocity different from that of the first mover (FIG. 4).

The moving targets are detected in ports 1, 2 and 3. They are detected in a doppler bin proportional to their true azimuth position plus their relative radial velocity. The phase shift between port 1-port 2 and port 2-port 3 is equivalent to a doppler bin that is matched to the phase shift between these vectors. This is proportional to the relative radial velocity.

The true target azimuth position is proportional to the phase difference due to its azimuth position. This is an equivalent doppler bin. The true azimuth position is proportional to the doppler bin of the detected target in port 1, 2, 3 minus the equivalent doppler bin of the relative radial velocity. The result of the three-port system is the detection of a moving target and measurement by prior art techniques of various target parameters such as relative radial velocity, true azimuth position and even amplitude and range.

In order to gain a better appreciation between the various doppler parameters and measured characteristics of a moving target, the overall relationship of vector quantities may be expressed as:

$$V_{DT} = V_{DV} + V_{DA}$$

where $V_{DV}$ equals Doppler due to target relative radial velocity of target to radar antenna;

$V_{DA}$ equals Doppler due to relative radial velocity due to a radar return existing at an angle relative to the boresight of an antenna;

$V_{DT}$ equals $\Delta\phi / \Delta t$.

The vector subtraction previously discussed yields the value of $\Delta\phi$ and $V_{DT}$ is the total doppler detected by the spectral processor 10 as indicated in FIG. 6. The original equation may then be transformed as follows:

$$V_{DA} = V_{DT} - V_{DV}.$$

Inasmuch as the quantities on the right side of the equation are known, the quantity $V_{DA}$ may be solved. In order to further solve for azimuth position, it is necessary to consider the expression:

$$V_{DA} = \frac{2V}{\lambda} \sin \theta$$

Having solved for $V_{DA}$ and being able to obtain the velocity of the aircraft (V) which carries the radar platform, further knowing the wavelength of the radar transmitted frequency, it is a straightforward matter to compute $\theta$ which is the angular deviation of the target from the boresight of the antenna indicated at reference numeral 30 in FIG. 6.

### BRIEF DESCRIPTION OF THE PRESENT INVENTION

The present invention is directed to a two-port clutter suppression interferometry system which is capable of attaining approximately the same results as a three-port system. However, as a consequence of the two-port system implementation, one less antenna is required along with a third less hardware associated with it; and there is a significant reduction in the complexity and cost as well as an increase in inherent reliability.

In the present invention only two antenna ports are employed; and basically, the same functions are performed on the two ports as were performed in the case of the prior art three-port system. Each port of the radar data is spectrally processed, by conventional means such as Fast Fourier Transforms. However, the processing occurs in a sliding window or independent segment fashion. Vector subtraction of port outputs results in a phase angle which is proportional to radial velocity and from which true

azimuth target position can be determined as in the prior art three-port system.

## BRIEF DESCRIPTION OF THE FIGURES

The above-mentioned objects and advantages of the present invention will be more clearly understood when considered in conjunction with the accompanying drawings, in which:

FIGS. 1A, 2A and 3A are vector representations of clutter at three separate ports of the prior art system;

FIGS. 1B and 1C are vector representations of a first and second target, respectively, at a first port of a prior art system;

FIGS. 2B and 2C are vector representations of a first and second target, respectively, at a second port of a prior art system;

FIGS. 3B and 3C are vector representations of a first and second target, respectively, at a third port of a prior art system;

FIGS. 1D and 1E are vector representations of first and second targets, respectively, at a first port of the prior art system;

FIGS. 2D and 2E are vector representations of first and second targets, respectively, at a second port of the prior art system;

FIGS. 3D and 3E are vector representations of first and second targets, respectively, at a third port of the prior art system;

FIG. 4 is a three-port vector diagram of a prior art system for a first target;

FIG. 5 is a three-port vector diagram of a prior art system for a second target;

FIG. 6 is a block diagram of a prior art three-port system;

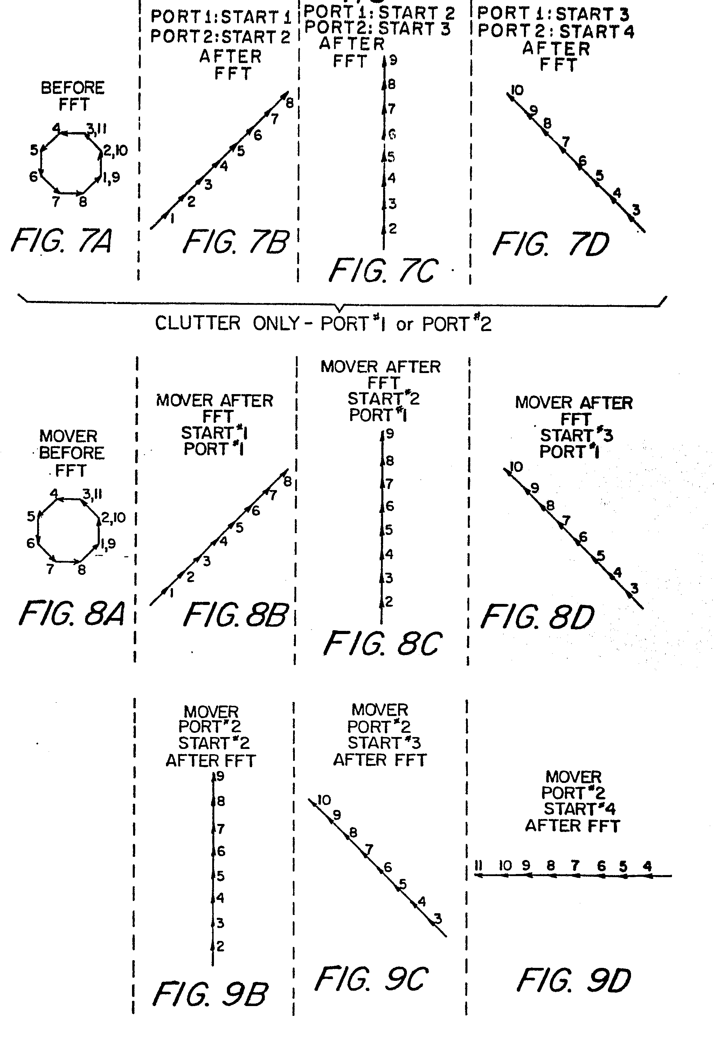

FIGS. 7A-7D are vector representations of clutter only, at first or second ports, of the present invention;

FIG. 8A is a vector representation of a mover before spectral processing;

FIGS. 8B-8D are vector representations of a mover at a first port of the invention at subsequent time intervals;

FIGS. 9B-9D are vector representations of a mover at a second port of the invention at subsequent time intervals;

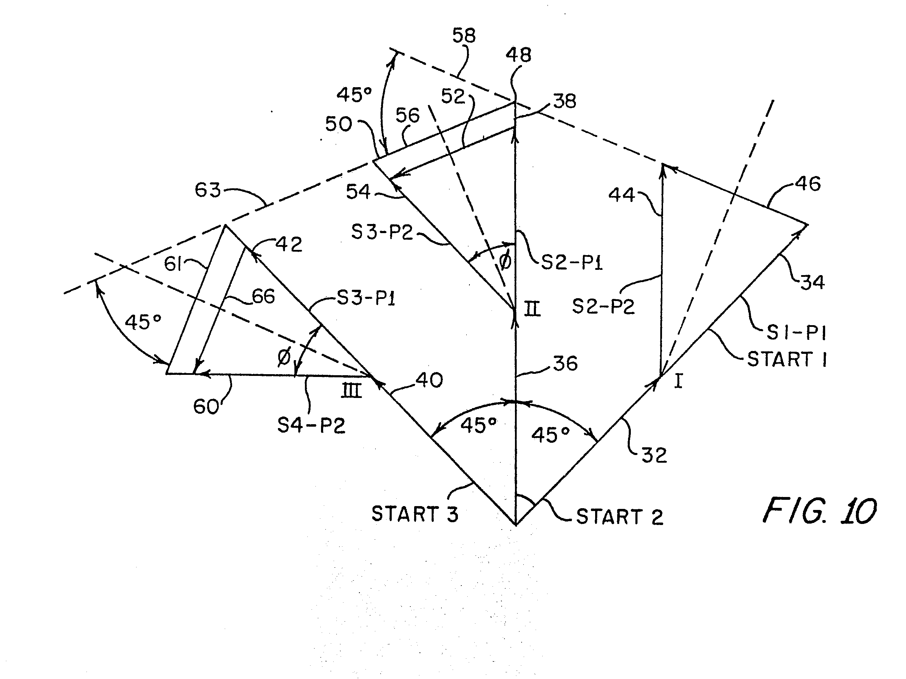

FIG. 10 is a composite vector diagram at ports 1 and 2 of the present invention for three succeeding processing times;

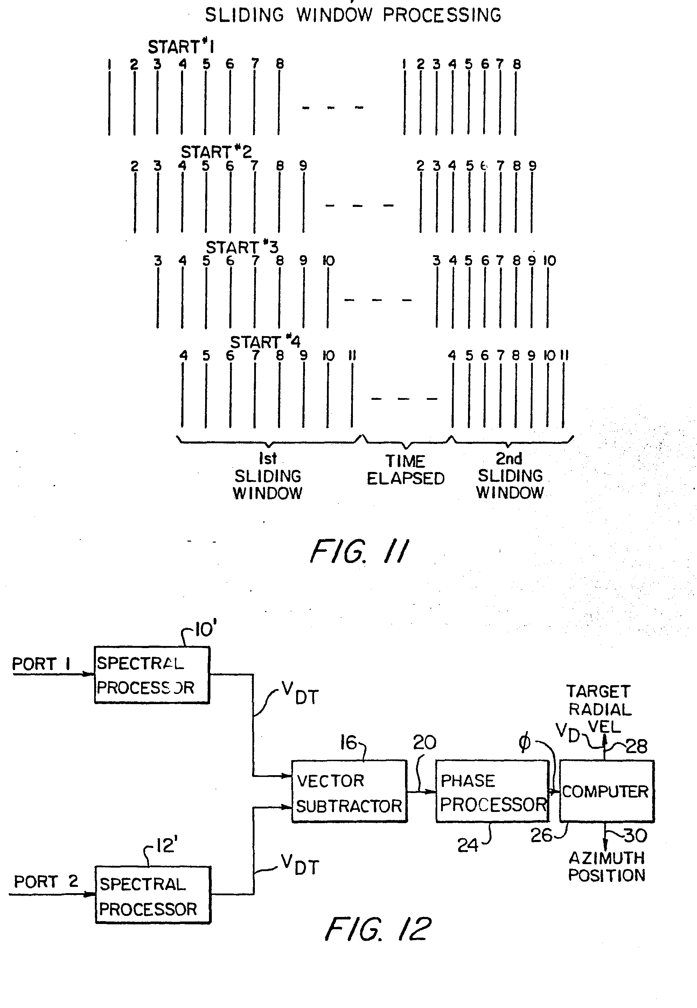

FIG. 11 is a diagrammatic representation of sliding window processing as employed for the present invention; and

FIG. 12 is a block diagram of the present two-port system.

## DETAILED DESCRIPTION OF THE INVENTION

Now that the prior art three-port system has been discussed in detail, the present invention will be discussed in connection with a two-port system which accomplishes essentially the same functions as the three-port system with one-third less complexity and attendant hardware.

The inventive two-port clutter suppression interferometer is shown in block diagram form in FIG. 12. The improved system basically attains all of the information of the prior art three-port system but, as indicated in FIG. 12, only two antenna ports are employed. Each port of the radar data is an input to a corresponding Fast Fourier Transform or other known, appropriate spectral processor 10', 12'. However, it is time processed in a sliding window fashion which permits the system to obtain a time history of a moving target. Without utilizing segment processing, such as sliding window processing, a vector is the amplitude and phase of a resulting velocity vector but does not determine the relative radial velocity of the mover in the presence of clutter.

FIGS. 7A-9D are vector diagrams for the two-port system of FIG. 12 and they illustrate the concept of the two-port system. As indicated in these vector diagrams, the number of radar returns is eleven in numbe., but this is by way of example only. In actuality, the number of returns may be from a few to hundreds. Further, a spectrally processed signal at a single frequency is shown wherein the phase shift between radar returns is $45^\circ$. A further simplifying assumption is an ideal noiseless processing system.

The processing relies upon a sliding window process which, per se, is known in the art. Sliding window processing is shown in FIG. 11. The uppermost pulse train comprises a first sliding window pulse train (START 1) separated from a second by a predetermined elapsed time. The second pulse train is designated as START 2, and so on up to and including START 4. Each succeeding pulse train differs from a prior pulse train by a time delay of a single pulse interval, but may differ by multiple pulse intervals.

FIG. 7A indicates the clutter return signals for port 1 or port 2 before spectral processing (FFT). As will be noted, each vector is displaced from a preceding vector by $45^\circ$. FIGS. 7B-7D respectively illustrate vector diagrams for the clutter returns after spectral processing wherein all of the clutter return vectors in each figure are oriented with the same phase angle and for respective START 1, 2 and 3 conditions.

FIG. 8A corresponds with that of FIG. 7A but represents the returns from a mover before spectral processing. FIGS. 8B-8D correspond to the vector diagrams of FIGS. 7B-7D, except that the returns are from a mover, after spectral processing and they respectively represent returns from port 1-START 1, 2 and 3.

FIGS. 9B-9D correspond to the vector diagrams of a mover as illustrated in FIGS. 8B-8D but with port 2 being represented for START 2, 3 and 4.

Considering FIGS. 7A-7D, if we examine port 1 or port 2, the clutter is identical in both ports. However, at the different STARTS 1-3, sliding window spectral processing causes the clutter output starting phase to change $45^O$, as shown in FIGS. 7B-7D. The starting phase of the clutter vector for a particular port changes $45^O$ with the start time. Each clutter vector start time would be a phase shift change proportional to the filtering that the clutter undergoes. If it were a $10^O$ phase shift filter, for each sliding window processing (START 1-3), the phase change between starts would be $10^O$. The amplitude of the clutter would remain the same. Therefore, the clutter vector starting phase would change with the filter and the starting time of the radar return (sliding window processing) and is predictable and computable).

The mover vector in port 1 is shown during succeeding start conditions in FIGS. 8B-8D and they appear in the same filter as the clutter and add to the clutter vector. This is the same for port 2, as shown in FIGS. 9B-9D, except that the mover vector has changed starting phase from those of port 1 and therefore the resultant vector of clutter plus mover is not zero (as with clutter only). This is a vector without any indication of radial velocity.

FIG. 10 illustrates the three clutter and mover vectors for ports 1 and 2, which results from three different sliding window processing conditions.

Referring in greater detail to FIG. 10, during START 1 the clutter vector is indicated by reference numeral 32 while the mover vector at port 1 is indicated by 34. This is also indicated as the START 1-port 1 condition (S1-P1). At port 2 the mover vector 44 is rotated by a $45^O$ phase shift between phase differences of the sliding window processing. This is indicated as the START 2-Port 2 condition (S2-P2). The resultant mover vector occurring as a result of the subtraction of port 1 minus port 2 is resultant vector 46 which establishes a reference for ompletion of phase angle measurement as will be presently een.

Since the processing occurs over a time period ypically approaching a quarter of a second or more, the loving target cannot stay in one range and/or doppler bin. 'he moving target will be moving from one range and/or loppler bin to another. The consequence of motion of the loving target is that the mover changes in amplitude from one sliding window processing to the next, as typified by ectors 38 and 54. This target change in range and/or loppler will result in a change in amplitude of the return where first detected and a change in the resultant vector 52 ifter a subtraction of vectors at ports 1 and 2.

Observation of the mover vectors shows that the mover vector amplitude is the same in port 1 and port 2. If the lover changes slightly in velocity, then the phase shift between mover vectors is approximately equal; and the implitude will change appreciably. The resultant vector 46 shown in FIG. 10 is indicative of a START 1 condition for port 1-port 2 and this indicates the mover target. If at the next sliding window processing START 2, the moving target has changed slightly in velocity, then the mover will appear in the same spectral processing doppler filter. The implitude of the output of the doppler filter will then change substantially. The resultant mover vector 52 changes in amplitude when compared to that of 46 but will be parallel to it after 46 extended (58) is rotated 45 degrees to position 56 where it forms a reference line for the phase change corresponding to subsequent start time 2. If the intersections 48, 50 are connected to respective vectors 38, 54, a triangle is produced that determines the phase change φ between the two resultant mover vectors. The phase change measured by processor 24 (FIG. 12) is proportional to relative radial velocity of the target. Hence, we have determined the relative radial velocity by two sliding window processing conditions of radar returns where the clutter is correlated and predictable and the mover due to its motion has changed in doppler which results in a change in amplitude of the mover. Similar phase and relative radial velocity determinations are made at subsequent condition START 3.

Reference line 56 is extended at 63 and rotated by the 45 degree shift dictated by the sliding window processing to reference line 61. Mover vectors 42 and 60 form resultant vector 66 which, when located parallel to reference line 61, establishes another triangle subtending the next phase change indicative of relative radial velocity at START 3. There are various actions of the moving target which cause it to change in amplitude. They are the following:

        a) significant movement from one doppler bin toward the next due to tangential velocity of target,

        b) significant movement from one range bin toward the next due to radial velocity of the target,

        c) radial acceleration of target causing it to move significantly from one doppler bin toward the next, or

        d) scintillation of target,

        e) target surface vibration,

        f) combinations of the above.

Therefore, a moving target has to have one or more of the aforementioned attributes or it would not be a moving target.

It is noted that the aforementioned discussion is simplified to exclude phase changes of moving targets which would modify FIG. 10 by imposing a corresponding angular shift of a triangle relative to its clutter vector. Such a target phase change would occur if the target moved along boresight at changing velocity or if the target accelerated.

Referring to FIG. 12, when the radial velocity is determined at output 28 of computer 26, the true azimuth position may be determined at output 30, as in the prior art three-port system.

It should be understood that the invention is not limited to the exact details of construction shown and described herein for obvious modifications will occur to persons skilled in the art.

1

## CLAIMS

1. A method for determining relative radial velocity of a target in the presence of clutter, the method comprising the steps:

spectrally processing doppler radar returns (10', 12') from two antenna ports (port 1, 2) during first timing intervals;

spectrally processing doppler radar returns (10', 12') from the two antenna ports during second timing intervals, delayed with respect to the first intervals;

subtracting (16) return vectors as processed from each of the two ports at succeeding intervals;

forming a resultant reference first vector from the vectors subtracted from the two ports during first and second succeeding intervals;

forming a resultant second vector from the vectors subtracted from the two ports during second and third succeeding intervals;

orienting the resultant second vector in predetermined angular relationship to the reference vector; and

calculating (24, 26) the phase angle subtended by the resultant second vector which is proportional to the relative radial velocity of a target.

2. The method set forth in claim 1 wherein the spectral processing steps include performing fast Fourier transforms on the radar returns.

3. The method set forth in claim 1 wherein the intervals are related to each other in a sliding window relationship.

4. A two-port doppler radar system comprising:

a first spectral processor (10') connected to a first port;

a second spectral processor (12') connected to a second port;

means connected at its inputs to the outputs of the spectral processors for subtracting (16) target return vectors derived from the processors;

means connected at its input to the output of the vector subtracting means for processing (24) phase angles between the subtracted vector; and

means connected at its input to the output of the phase processing means for computing (26) target radial velocity from phase angle information.

5. The structure set forth in claim 4 wherein each of the spectral processors performs fast Fourier transforms on the returns from respective ports.

0200643

1/6

PORT 1
CLUTTER ONLY

BEFORE FFT          AFTER FFT

FIG. 1A

PORT 2
CLUTTER ONLY

BEFORE FFT          AFTER FFT

FIG. 2A

1st MOVER ONLY

BEFORE FFT    AFTER FFT

FIG. 1B

2nd MOVER ONLY

BEFORE FFT    AFTER FFT

FIG. 1C

1st MOVER ONLY

BEFORE FFT    AFTER FFT

FIG. 2B

2nd MOVER ONLY

BEFORE FFT    AFTER FFT

FIG. 2C

1st MOVER
PLUS CLUTTER
AFTER FFT

FIG. 1D

2nd MOVER
PLUS CLUTTER
AFTER FFT

FIG. 1E

1st MOVER
PLUS CLUTTER
AFTER FFT

FIG. 2D

2nd MOVER
PLUS CLUTTER
AFTER FFT

FIG. 2E

PORT 3
CLUTTER ONLY

BEFORE FFT          AFTER FFT

FIG. 3A

PORT 1-PORT 2
PORT 1
PORT 2-PORT 3
PORT 2
PORT 3

FIG. 4

MOVER AT BORESIGHT
OF ANTENNA

1st MOVER ONLY          2nd MOVER ONLY

BEFORE     AFTER        BEFORE     AFTER
FFT        FFT          FFT        FFT

FIG. 3B          FIG. 3C

1st MOVER
PLUS CLUTTER
AFTER FFT

2nd MOVER
PLUS CLUTTER
AFTER FFT

PORT 2
PORT 3
PORT 1
PORT 2
PORT 1
PORT 2
PORT 3

FIG. 5

MOVER OFF BORESIGHT
OF ANTENNA

FIG. 3D          FIG. 3E

PRIOR ART

*FIG. 6*

0200643

0200643

4/6

FIG. 7A — BEFORE FFT

FIG. 7B — PORT 1: START 1 / PORT 2: START 2 / AFTER FFT

FIG. 7C — PORT 1: START 2 / PORT 2: START 3 / AFTER FFT

FIG. 7D — PORT 1: START 3 / PORT 2: START 4 / AFTER FFT

CLUTTER ONLY - PORT #1 or PORT #2

FIG. 8A — MOVER BEFORE FFT

FIG. 8B — MOVER AFTER FFT START #1 PORT #1

FIG. 8C — MOVER AFTER FFT START #2 PORT #1

FIG. 8D — MOVER AFTER FFT START #3 PORT #1

FIG. 9B — MOVER PORT #2 START #2 AFTER FFT

FIG. 9C — MOVER PORT #2 START #3 AFTER FFT

FIG. 9D — MOVER PORT #2 START #4 AFTER FFT

FIG. 10

# 6/6

## SLIDING WINDOW PROCESSING

START #1

1 2 3 4 5 6 7 8 --- 1 2 3 4 5 6 7 8

START #2

2 3 4 5 6 7 8 9 --- 2 3 4 5 6 7 8 9

START #3

3 4 5 6 7 8 9 10 --- 3 4 5 6 7 8 9 10

START #4

4 5 6 7 8 9 10 11 --- 4 5 6 7 8 9 10 11

1st
SLIDING
WINDOW

TIME
ELAPSED

2nd
SLIDING
WINDOW

*FIG. II*

PORT 1 → SPECTRAL PROCESSOR 10' → $V_{DT}$ → VECTOR SUBTRACTOR 16 → 20 → PHASE PROCESSOR 24 → $\phi$ 26 → COMPUTER → TARGET RADIAL VEL $V_D$ 28 / AZIMUTH POSITION 30

PORT 2 → SPECTRAL PROCESSOR 12' → $V_{DT}$

*FIG. 12*